(19) Europäisches Patentamt / European Patent Office / Office européen des brevets

(11) **EP 2 013 416 B1**

(12) **FASCICULE DE BREVET EUROPEEN**

(45) Date de publication et mention
de la délivrance du brevet:
**19.01.2011 Bulletin 2011/03**

(51) Int Cl.:
***D21H 27/00*** *(2006.01)*

(21) Numéro de dépôt: **07731292.4**

(86) Numéro de dépôt international:
**PCT/FR2007/000625**

(22) Date de dépôt: **13.04.2007**

(87) Numéro de publication internationale:
**WO 2007/119003 (25.10.2007 Gazette 2007/43)**

(54) **FEUILLE ABSORBANTE DELITABLE MULTIPLIS, ROULEAU ET PROCEDE DE FABRICATION ASSOCIES**

ABTRENNBARES MEHRLAGIGES SAUGBLATT, DAZU GEHÖRIGE ROLLE UND HERSTELLUNGSVERFAHREN

SEPARABLE MULTI-PLY ABSORBENT SHEET, ASSOCIATED ROLL AND MANUFACTURING METHOD

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **14.04.2006 EP 06290613**

(43) Date de publication de la demande:
**14.01.2009 Bulletin 2009/03**

(73) Titulaire: **Georgia-Pacific France**
**92270 Bois-Colombes (FR)**

(72) Inventeurs:
• **BARREDO, Donald**
**68040 Ingersheim (FR)**
• **GRAFF, Pierre**
**68600 Wolfgantzen (FR)**
• **PROBST, Pierre**
**68770 Ammerschwihr (FR)**

(74) Mandataire: **David, Daniel**
**Bloch & Bonnétat**
**23bis, rue de Turin**
**75008 Paris (FR)**

(56) Documents cités:
**EP-A- 0 264 676     EP-A- 1 428 654**
**WO-A-98/52745     FR-A1- 2 775 698**

**Description**

La présente invention concerne le domaine des feuilles de papier absorbant en matériau fibreux tel que l'ouate de cellulose, comprenant entre cinq et douze plis.

Le domaine d'application préféré de l'invention est celui du papier à usage sanitaire ou domestique voire cosmétique tel que le papier toilette, mais aussi l'essuie-tout, les mouchoirs ou encore les « formats » utilisables pour nettoyer et/ou démaquiller la peau.

D'une façon générale, ce type de produits doit présenter un certain nombre de caractéristiques telles que douceur, souplesse, résistance à sec et/ou humide, absorption, épaisseur mais aussi délitabilité ...

Selon l'application envisagée, l'un ou plusieurs autres de ces paramètres prévaudra, et les produits connus présentent ainsi soit une bonne douceur, soit une excellente absorption, soit une parfaite résistance...

Par ailleurs, l'aspect visuel est aussi un paramètre à prendre en compte : l'esthétique des produits absorbants connus peut être réalisé par le gaufrage de la feuille, ou encore par des motifs d'impression à l'encre, plus ou moins visibles et harmonieux, ou encore par une combinaison des deux techniques.

Concernant le papier toilette, on cherchera à obtenir une bonne résistance, une certaine épaisseur ainsi qu'une grande douceur. La résistance et la douceur peuvent paraître difficilement compatibles mais en combinant certaines fibres et/ou certains grammages à un traitement tel que le calandrage, on obtient de bons résultats.

Cependant, les produits connus ne présentent pas l'ensemble des caractéristiques souhaitées et énoncées ci-avant ; un choix est donc généralement réalisé, qui permet d'aboutir à un produit présentant une ou deux des caractéristiques techniques ci-dessus énoncées.

L'objet de la présente invention est de réaliser simultanément des performances sur l'ensemble des caractéristiques.

Une démarche qui peut paraître simple et évidente consiste à associer un grand nombre de plis pour former une feuille absorbante très épaisse. Cette démarche est restée jusqu'à ce jour de nature théorique car des problèmes techniques surviennent lorsque l'on souhaite associer quatre plis et plus : soit on doit prévoir plusieurs postes de collage, soit des moyens d'association mécaniques nécessitant une forte pression sur chacun des plis formant la feuille sont nécessaires.

Les postes de collage induisent chacun des problèmes d'encrassement, de maintenance, d'encombrement sur la ligne de fabrication ... d'où des surcoûts et/ou des complications dans la fabrication.

D'autre part de trop fortes pressions produisent une usure prématurée des rouleaux ou cylindres de fabrication, un écrasement des motifs de gaufrage 8t/ou des vibrations qui se révèlent non seulement nuisibles pour les cylindres eux-mêmes mais qui en outre ont un effet négatif sur la qualité et la fiabilité des feuilles produites.

On connaît la demande de brevet WO 97/20107 qui décrit une feuille de papier absorbant multi plis dont les plis sont associés en phase de transformation par une méthode dite " dry marking " qui consiste à déformer sous contrainte la feuille dans son épaisseur, par passage entre un rouleau gravé à surface externe rigide et un rouleau lisse de surface externe moins dure que le rouleau gravé. On obtient ainsi un produit multi plis associé uniquement mécaniquement, et marqué dans certaines régions.

D'autres feuilles absorbantes sont connues des documents WO 98/52745 et FR 2 775 698.

Par ailleurs des feuilles de papier absorbant très épaisses et/ou utilisées simultanément en trop grand nombre peuvent induire des bouchages dans les canalisations. Pourtant un besoin existe, particulièrement mais non exclusivement concernant le papier toilette, pour un papier à la fois plus épais, résistant, doux, souple, absorbant et facilement délitable.

En effet, avec un papier présentant l'ensemble de ces caractéristiques, l'utilisateur peut n'utiliser qu'un seul format (ou feuille) à la fois, c'est-à-dire à chaque essuyage, d'où des économies non négligeables quand on sait qu'avec les papiers toilette connus, plusieurs feuilles (quatre ou cinq) sont couramment utilisées par les consommateurs à chaque utilisation.

Ainsi en consommant moins de feuilles à chaque utilisation, le risque de bouchage des canalisations est fortement réduit. La présente invention propose une solution non évidente, simple, fiable et adaptable à plusieurs types de production.

Le papier toilette représente une application préférée de l'invention, mais l'invention est également envisageable pour d'autres produits tels que les formats pour nettoyer, démaquiller ou autres soins de la peau, ainsi que l'essuie-tout, les mouchoirs en papier ...

La présente invention a pour objet une feuille absorbante délitable multi-plis, telle que définie par la revendication 1.

Selon une autre caractéristique, la feuille absorbante présente en outre un coefficient $K_D = K_{NOVE} \times \exp(D) > 100\,000$,

D étant une valeur de douceur comprise entre -3 et +3.0

Une douceur remarquable est ainsi obtenue selon l'invention, pour une feuille par ailleurs à la fois épaisse et souple.

Conformément à l'invention, la feuille absorbante présente une résistance à la traction selon sa longueur supérieure à 700 N/m.

Préférentiellement, la feuille présente une résistance à la traction selon sa largeur supérieure à 300 N/m.

Ainsi, une telle feuille absorbante présente simultanément des caractéristiques de douceur, épaisseur, ainsi qu'une exceptionnelle résistance à la traction à la fois selon sa longueur et selon sa largeur.

De façon particulière, la feuille peut comprendre entre 5 et 9 plis ; chaque pli pouvant lui-même comprendre un groupe de plis.

Cette épaisseur incite l'utilisateur à utiliser un nombre réduit de feuilles, préférablement une seule, à chaque utilisation.

Les feuilles peuvent présenter une longueur d'environ 140 mm et une largeur d'environ 110 mm, notamment pour des utilisations en tant que papier hygiénique.

Un tel format est plutôt supérieur au format des feuilles connues, d'où encore une fois, une dissuasion de prendre plusieurs feuilles simultanément.

Par ailleurs, dans le cadre de l'utilisation comme papier hygiénique, les rouleaux selon l'invention peuvent comprendre entre 60 et 120 feuilles, nombre largement inférieur aux rouleaux de papier toilette classiques. Bien entendu, vu les caractéristiques intrinsèques de chaque feuille, ceci n'induit pas un surcoût pour l'utilisateur puisque l'un des avantages importants de l'invention réside dans la consommation d'une seule feuille au lieu de trois, quatre, voire plus, à chaque utilisation.

On reconnaît là un gain financier important, nettement favorable et apprécié par les acheteurs.

En outre, malgré l'épaisseur importante des feuilles, des rouleaux peuvent être formés sans problème. Ceci est rendu possible grâce aux caractéristiques intrinsèques des feuilles selon l'invention, qui présentent simultanément une élasticité et une souplesse remarquables et tout à fait compatibles avec un enroulement, même au centre du rouleau où les rayons de courbure sont les plus faibles.

Par ailleurs, l'invention a pour objet un procédé de fabrication de feuilles absorbantes délitables consistant à gaufrer séparément et différemment au moins trois des plis formant ladite feuille, à associer chimiquement lesdites feuilles grâce à une unique unité de collage puis à associer mécaniquement l'ensemble des plis grâce à un cylindre de pression.

Sans sortir du cadre de l'invention, le procédé de fabrication peut consister, en phase humide, à projeter un ensemble de fibres papetières sur une toile afin de former un matelas, à transférer ce matelas contre la surface d'un cylindre de séchage poreux, à faire traverser le matelas par des jets d'air issus dudit cylindre, puis à transférer le pli ainsi formé sur un cylindre de crêpage. On forme ainsi plusieurs plis indépendamment les uns des autres puis ultérieurement en phase dite sèche, on associe ensemble lesdits plis par déformation mécanique.

Selon un mode préféré de réalisation de l'invention, l'une au moins des surfaces externes de la feuille est obtenue par ce procédé.

Selon ces procédés, la pression spécifique minimale d'association des plis est de l'ordre de 3 kg/mm$^2$.

L'invention vise en outre une feuille absorbante délitable multi plis comprenant des plis obtenus par l'un des procédés ci-dessus et/ou des plis obtenus par l'autre des procédés précités.

D'autres caractéristiques, avantages, détails de l'invention apparaîtront mieux à la lecture de la description qui va suivre faite à titre illustratif et nullement limitatif, en référence aux dessins annexés sur lesquels :

- la figure 1 est une coupe schématique dans l'épaisseur d'une feuille réalisée selon l'un des modes de réalisation de l'invention ;
- la figure 2 est un schéma illustratif d'une installation permettant de fabriquer des feuilles selon l'un des modes de réalisation de l'invention ;
- la figure 3 est une perspective simplifiée d'un rouleau obtenu conformément à l'invention.

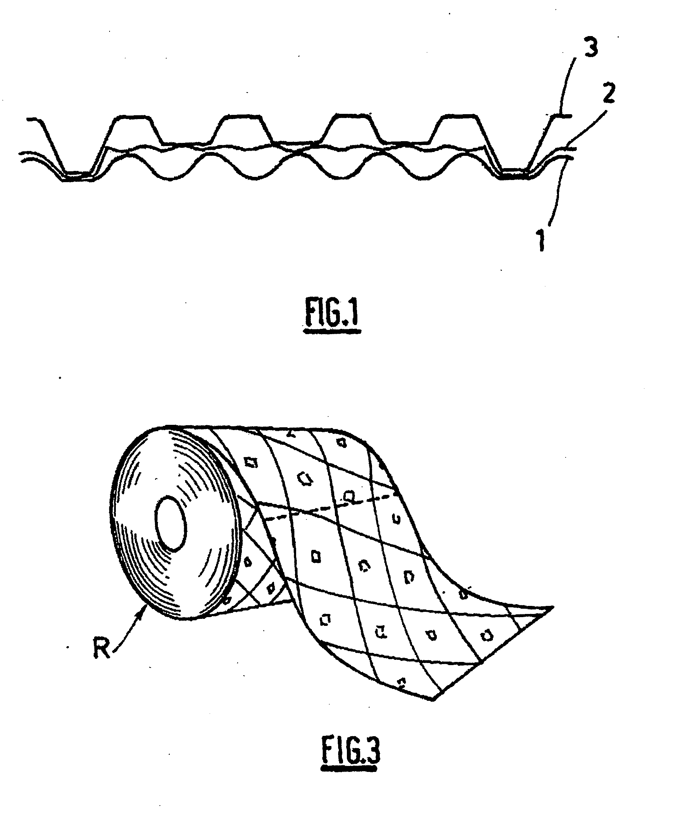

Conformément à la figure 1, une feuille comprenant entre 5 et 12 plis selon l'invention peut présenter une structure présentant au moins trois plis ou groupes de plis 1, 2,3.

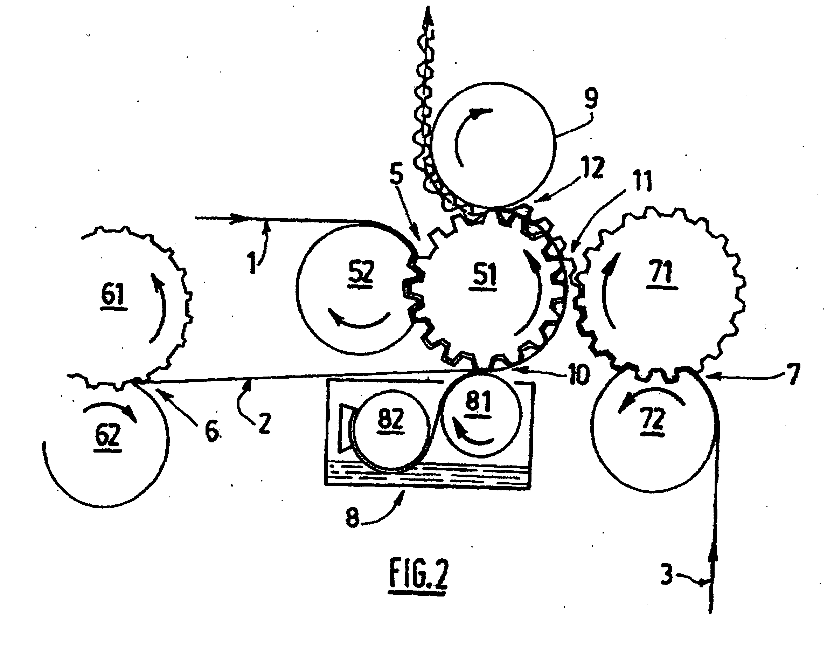

Selon l'un des modes de réalisation de l'invention chaque pli ou groupe de plis est gaufré indépendamment (comme il sera explicité plus en détail en relation avec la figure 2) et différemment.

A titre illustratif, le premier pli (ou groupe de plis) 1 peut être un pli extérieur, gaufré avec un motif dit esthétique ; le deuxième pli 2 (ou groupe de plis) est disposé à l'intérieur de la feuille et comprend un microgaufrage grossier ; par « microgaufrage grossier » il faut par exemple comprendre un microgaufrage comprenant environ 25 protubérances par cm$^2$. Ce pli confère et assure de l'épaisseur à la feuille ainsi qu'une certaine rigidité et une bonne tenue mécanique.

Le troisième pli 3 (ou groupe de plis) forme la deuxième surface externe de la feuille et peut avantageusement être muni d'un microgaufrage, c'est-à-dire d'un gaufrage comprenant au moins 30 protubérances par cm$^2$.

Le troisième pli permet ainsi de limiter l'effet d'envers, c'est-à-dire la trace visible du gaufrage du premier pli sur le troisième pli, et il permet surtout d'éviter une sensation désagréable au toucher.

Chaque pli peut présenter ou non la même nature.

L'expression « groupe de plis » signifie que chacun desdits premier, deuxième et/ou troisième pli précités peuvent en fait être constitué d'un ou de plusieurs plis.

En outre, les plis 1, 2, 3 sont collés entre eux au niveau de points et/ou lignes de colle 4. La nature de la colle ainsi que son taux de dilution sont connus en eux-mêmes et aisément déterminables par l'homme du métier dans l'exercice habituel de ses compétences.

Avantageusement, la colle est déposée sur l'une des surfaces internes de la feuille comme il est visible sur la figure 1.

La figure 2 montre de façon schématique une installation susceptible de fabriquer des feuilles conformément à un mode de réalisation de l'invention. Le procédé associé sera décrit en relation avec cette figure 2.

Ainsi, chacun des plis 1, 2, 3 est gaufré de façon connue en soi entre un cylindre gravé en acier 51, 61, 71 et un cylindre en caoutchouc 52, 62, 72.

Chacun des plis a été fabriqué au préalable en voie humide par la technologie bien connue de l'homme de l'art du type CWP (Conventional Wet Press).

A titre illustratif le premier pli 1 est gaufré dans un « nip » 5 entre le premier cylindre gravé 51 et le premier cylindre lisse 52, la gravure du premier cylindre 51 étant telle qu'un motif de gaufrage plutôt esthétique (motifs) est réalisé sur le premier pli 1 (ou groupe de plis) qui constituera l'une des surfaces externes de la feuille.

L'autre surface externe de la feuille est constituée par le troisième pli 3 (ou groupe de plis) qui est gaufré dans un « nip » 7 entre le troisième cylindre gravé 71 et le troisième cylindre lisse 72. La gravure du troisième cylindre gravé 71 est telle qu'un micro-gaufrage est par exemple formé sur le troisième pli (ou groupe de plis) 3. De façon habituelle un micro-gaufrage est défini par une densité de protubérances supérieure ou égale à 30 par $cm^2$.

En outre, le deuxième pli 2 (ou groupe de plis) est intercalé entre les premier et troisième pli.

Le deuxième pli est gaufré entre le deuxième cylindre de gaufrage 61 et le deuxième cylindre lisse 62, au niveau d'un deuxième « nip » 6.

Préférentiellement, le gaufrage obtenu est un micro-gaufrage grossier comme déjà évoqué ci-avant.

Une fois gaufré, le deuxième pli 2 est dirigé vers une unité d'encollage 8, connue en elle-même, qui comprend essentiellement un cylindre plongeur 82 et un cylindre applicateur 81.

L'unité d'encollage 8 est préférentiellement disposée sous le premier cylindre gravé 51, de sorte que le cylindre applicateur 81 coopère avec le premier cylindre gravé 51 au niveau d'un nip 10.

Plus précisément, le cylindre applicateur 81 vient en appui sur le cylindre gravé 51 par l'intermédiaire du deuxième pli 2 et du premier pli 1 superposés. Le cylindre plongeur 82 transfère l'adhésif depuis la réserve de colle de l'unité 8 vers le cylindre applicateur 81. Le cylindre applicateur 81 exerce une certaine pression sur le cylindre gravé 51 au niveau de la surface distale des protubérances du premier pli gaufré 1. Avec une pression suffisante, la colle traverse le deuxième pli 2 et l'association des plis 1 et 2 en est améliorée.

Dans une variante de réalisation, le cylindre applicateur de colle 81 peut présenter une surface gravée dans le but de n'appliquer de la colle que sur une partie seulement des sommets de la gravure. En réduisant la surface encollée, on peut ainsi améliorer la souplesse du produit fini.

L'adhésif utilisé 4 peut être une colle standard de type PVA ou thermofusible (hotmelt). On a utilisé à titre d'exemple une colle commercialisée par la société SWIFT. Cette colle a été diluée à l'eau dans des proportions optimales pour obtenir le transfert approprié sur les plis.

Selon un autre mode de réalisation, on pulvérise par des moyens appropriés une colle « hotmelt » sur chacune des faces du deuxième pli. Dans ce cas, il faut appliquer la colle avant que le pli 2 vienne au contact des deux autres plis.

Selon encore un autre mode de réalisation, on applique un adhésif aqueux par pulvérisation sur le pli central 2.

Après avoir passé le nip 10, c'est-à-dire une fois associés entre eux, les plis 1 et 2 sont associés au troisième pli gaufré 3.

Les plis passent d'abord (selon la flèche 11) entre le premier cylindre gravé 51 et le troisième cylindre gravé 71 puis ils sont associés au niveau d'un nip 12 via des points de colle 4 grâce à un cylindre marieur 9 qui coopère avec le premier cylindre gravé 51.

Cette association est réalisée entre le cylindre marieur 9 dont la dureté est moindre que celle du premier cylindre de gaufrage 51, avec une pression spécifique de l'ordre de 10 $kg/mm^2$.

Il est à remarquer que selon le mode de réalisation de l'invention qui vient d'être décrit, les au moins trois plis (ou groupe de plis) formant la feuille ont chacun subi en phase de transformation ou converting, une déformation différente.

Cette caractéristique induit à la fois du gonflant, de la douceur et une esthétique harmonieuse à chaque feuille.

Sans sortir du cadre de l'invention, l'association des plis peut être réalisée par moletage entre des mollettes (dures) gravées et des cylindres lisses moins durs. La déformation par moletage est de type mécanique mais elle ne concerne alors que des bandes plus ou moins larges sur les plis.

D'une façon générale, l'association par moletage est moins bonne que l'association par gaufrage et/ou collage, et l'impression de relief définie par un moletage est moins visible qu'avec une association par gaufrage et/ou collage.

A titre illustratif, le brevet US 3 377 224 divulgue un procédé de moletage classique.

En accord avec l'invention, l'association des plis peut être réalisée par une technique dite de « dry marking », par exemple conformément aux enseignements du brevet EP 864 014 B1 : selon ce procédé connu, on fait successivement passer les plis à associer entre un premier cylindre récepteur sensiblement élastique et un cylindre gravé, puis entre ce même cylindre et un deuxième cylindre sensiblement élastique fixe ; le premier cylindre récepteur et le cylindre gravé étant mobiles et le deuxième cylindre élastique étant fixe, on obtient une association de plis telle que la feuille présente une face lisse et une face ayant des motifs imprimés d'épaisseur réduite.

La particularité du procédé selon l'invention est de pouvoir associer au moins trois plis ou groupe de plis. Plus précisément le nombre total de plis peut être N = n + m + p; n, m, p étant chacun un nombre entier préférentiellement et non limitativement compris entre 1 et 3. Favorablement des rouleaux ont été réalisés avec des feuilles comprenant entre 5 et 12 plis.

Selon l'invention, l'association des plis est avantageusement réalisée grâce à un unique dépôt de colle, lorsque chacun des plis est obtenu en voie humide par une technique de type CWP.

Une autre particularité intéressante de l'invention réside dans le fait que la feuille absorbante est délitable c'est-à-dire se désagrège facilement dans l'eau, malgré le nombre élevé de plis qui la constitue. La délitabilité (délitage) au sens de l'invention est notamment celle définie par la norme française NF Q 34-020. Cette norme s'applique aux articles à usage sanitaire et domestique, notamment aux papiers hygiéniques et elle concerne la mesure du délitage de tels produits.

Conformément à une caractéristique remarquable de l'invention, les feuilles absorbantes présentent un coefficient $K_{NOVE} = R_{SM} \times R_{ST} \times A \times G \times Exp (12 \times (E + E_P)) \times (1/Exp (Sp)) > 75\,000$ avec

$R_{ST}$ = résistance à la traction de la feuille selon la largeur de la feuille en N/m
$R_{SM}$ = résistance à la traction de la feuille selon la longueur de la feuille en N/m
$G$ = grammage de la feuille en kg/m$^2$
$E$ = épaisseur de la feuille en mm
$Sp$ = souplesse de la feuille en N
$A$ = absorption de la feuille en kg/m$^2$
$E_P$ = épaisseur moyenne d'un pli de la feuille en mm, Ep étant supérieure à 0,115 mm.

Toutes les feuilles dont les caractéristiques correspondent à cette définition technique présentent à la fois de l'épaisseur, de la douceur, une bonne résistance. Il est tout à-fait inattendu de trouver simultanément ces caractéristiques dans une feuille absorbante facilement délitable.

C'est pourquoi les applications envisageables de l'invention sont nombreuses et variées : papier toilette, essuie-tout, produit nettoyant, démaquillant.

La « résistance à la traction » ou plus précisément « résistance à la rupture par traction » définie dans la norme NF EN 12625-4, partie 4, est la force maximale de traction, supportée par unité de largeur d'une éprouvette de papier tissue ou de produit tissue jusqu'à la rupture, dans un essai de traction. Le principe de cet essai est d'étirer jusqu'à la rupture, à une vitesse constante d'allongement de 50 mm/min, une éprouvette de 50 mm de large et d'au moins 150 mm de long.

Pour ce faire, on place successivement les échantillons à mesurer, entre deux mâchoires d'un appareil d'essai (tel que précisément défini dans la norme EN 12625-4) : au moins 20 échantillons sont soumis à l'essai.

Les mâchoires de l'appareil s'écartent l'une de l'autre à une vitesse constante d'environ 50 mm/min, on enregistre toutes les valeurs significatives des forces lors de la rupture des échantillons.

Puis on calcule la moyenne desdites forces de rupture : F, (exprimée en N) afin de déterminer la résistance moyenne à la rupture en traction Fm exprimée en N/m telle que :

$$Fm = \frac{F \times 10^3}{wi}$$

avec wi : largeur initiale de l'éprouvette (normalement 50 mm).

Concernant la souplesse Sp de la feuille, exprimée en N, celle-ci est déterminée par une méthode dite « ring and rod » qui consiste à faire passer la feuille de surface S à travers un trou de diamètre légèrement supérieur au grand diamètre d'un tronc de cône entouré par la feuille. On mesure la force de traction sur la feuille avant et pendant son passage à travers le trou que l'on reporte sur un graphe ayant pour abscisse la force de traction (en N) et en ordonnée le déplacement du tronc de cône (en mm). Lors du passage à travers le trou, la pente de la courbe change et l'on relève la valeur de la force au niveau du point d'inflexion. Cette valeur est corrélée à la souplesse Sp (en N) de ladite feuille, puisqu'elle est inversement proportionnelle à ladite force.

E est l'épaisseur mesurée de la feuille obtenue selon la norme Européenne EN 12625-3, tandis que Ep est l'épaisseur moyenne d'un pli de ladite feuille. Plus précisément $E_P$ est l'épaisseur totale de la feuille divisée par le nombre de plis constituant la feuille ; ici considérée comme supérieure à 0,115 mm.

A est l'absorption de la feuille, en kg par m$^2$, c'est-à-dire la masse de liquide absorbé par unité de surface de la feuille. Ce paramètre est déterminé à partir des conditions de la norme EN 12625-8, en ce sens que l'absorption est ainsi mesurée en gramme de liquide par gramme de papier connaissant par ailleurs le grammage du papier (en poids par unité de surface), le produit de ces valeurs conduit à une absorption en poids par unité de surface, telle que donnée dans le tableau ci-après.

En outre, concernant sa douceur, le produit absorbant selon l'invention peut être caractérisé par un coefficient $K_D = K_{NOVE}$ x Exp (D) > 100 000, D étant un nombre compris entre -3 et +3 obtenu selon le test suivant :

La personne qui teste le produit, choisit un qualificatif relatif à la douceur sur une échelle verbale. La méthode consiste à attribuer des notes à cette échelle verbale suivant le tableau de correspondance ci-après, en comparant chacune des feuilles du test avec un même témoin 0 :

Echelle verbale/Note

| | |
|---|---|
| Nettement moins doux | -3 |
| Moins doux | - 2 |
| Probablement moins doum | - 1 |
| Pas de différence | 0 |
| Probablement plus doux | +1 |
| Plus doux | +2 |
| Nettement plus doux | +3 |

On multiplie ensuite le nombre de personnes ayant choisi un qualificatif de douceur donné par la note correspondant à ce qualificatif. Puis on fait la somme des points obtenus que l'on divise par le nombre total de personnes, pour obtenir une note moyenne. Cette note moyenne D située entre -3 et +3, donne le résultat du test pour un produit donné.

Le Tableau ci-après donne des valeurs pour différents types de feuilles obtenues selon l'invention, et pour différents produits connus.

| | Produit | Absorption kg / m² | Epaisseur/pli mm | nb de plies | Grammage kg/m² | Epaisseur Produit mm | Résistance SM N/m | Résistance ST N/m | Douceur | Souplesse SP en N | K NOVE | K Douceur |
|---|---|---|---|---|---|---|---|---|---|---|---|---|
| Invention | 9 plis | 0,00120 | 0,123 | 9 | 0,148 | 1,11 | 1017 | 392 | 1,0 | 3,1 | 8965523 | 24370818 |
| | 5 plis (2tad+1cwp+2tad) | 0,00112 | 0,186 | 5 | 0,097 | 0,93 | 396 | 242 | 1,5 | 1,5 | 1514893 | 6789278 |
| | 7 plis | 0,00091 | 0,134 | 7 | 0,114 | 0,94 | 704 | 234 | 1,0 | 1,9 | 1068857 | 2905455 |
| | 6 plis | 0,00092 | 0,150 | 6 | 0,110 | 0,90 | 580 | 260 | 1,0 | 1,9 | 714713 | 1942791 |
| | 5 plis (1tad+3cwp+1tad) | 0,00096 | 0,154 | 5 | 0,090 | 0,77 | 439 | 365 | 1,5 | 1,5 | 200804 | 899942 |
| Art antérieur GP | Moltonel | 0,00045 | 0,207 | 3 | 0,051 | 0,62 | 350 | 180 | 1,2 | 0,7 | 15306 | 50819 |
| | Royal | 0,00044 | 0,173 | 3 | 0,052 | 0,52 | 322 | 173 | 1,0 | 0,7 | 2579 | 7011 |
| | Lotus confort | 0,00035 | 0,160 | 2 | 0,041 | 0,32 | 235 | 97 | 2,2 | 0,2 | 82 | 743 |
| | Lotus petite fleur | 0,00033 | 0,165 | 2 | 0,040 | 0,33 | 208 | 87 | 2,2 | 0,4 | 61 | 551 |

De ce tableau il ressort clairement que l'invention, via notamment les coefficients $K_{NOVE}$ et $K_D$ prédéfinis, se distingue de l'art antérieur. L'invention permet d'améliorer simultanément la résistance du produit, son épaisseur et sa douceur.

Par ailleurs, les feuilles selon l'invention sont rectangulaires ou sensiblement rectangulaires et présentent une résistance à la traction supérieure à environ 700 N/m selon leur longueur, et simultanément supérieure à environ 300 N/m selon leur largeur.

Ces valeurs peuvent être considérées comme hautes comparativement aux valeurs connues : on connaît par exemple le papier toilette 4 plis commercialisé en Allemagne sous la marque " SERVUS " par la société KIMBERLY-CLARK et qui présente une résistance de 605 N/m selon sa longueur. Ceci est une des valeurs les plus élevées des papiers toilette actuellement commercialisés, comme le révèle le tableau ci-avant.

La résistance à la traction de ce même papier selon sa largeur se situe aux alentours de 208 N/m.

Concernant la résistance à la traction selon la largeur de chaque feuille, le produit commercialisé en Allemagne sous la marque " HAKLE ULTRA CARE " par la société KIMBERLY-CLARK présente une résistance d'environ 283 N/m selon sa largeur, valeur considérée comme très élevée. Par contre ce papier présente une résistance d'environ 593 N/m selon sa longueur.

Ainsi la présente invention présente une exceptionnelle résistance à la traction, à la fois selon sa longueur et selon sa largeur, ainsi que d'autres caractéristiques notamment celle relative au coefficient $K_{NOVE}$.

La caractéristique relative à la résistance à la traction obtenue selon l'invention associée ou non aux autres caractéristiques autorise favorablement la consommation d'une seule feuille par utilisation, et non de plusieurs comme cela se fait jusqu'à présent.

De façon surprenante et inattendue, les résistances précitées ne diminuent d'aucune façon la douceur du produit obtenu, ni sa souplesse. Le tableau ci-avant montre l'amélioration apportée par l'inventeur sur ce point.

L'épaisseur préférée est supérieure à 0,75 mm et préférentiellement inférieure à 1,5 mm tandis que le grammage est supérieur à environ 70 g/m$^2$ et préférentiellement inférieur à 150 g/m$^2$.

Ces valeurs, élevées comparativement à la plupart des produits connus, renforcent le caractère unitaire de la consommation du produit.

Afin de renforcer encore l'utilisation feuille à feuille, dans le cas de papier hygiénique, une dimension de 140 mm x 110 mm est préférée. Cette dimension est quelque peu supérieure à la dimension habituelle.

Conformément à un mode de réalisation de l'invention, les feuilles absorbantes sont liées entre elles par des prédécoupes et forment ensemble un rouleau.

Etant donné les caractéristiques intrinsèques des feuilles telles que notamment énoncées ci-avant, le taux de prédécoupe peut être choisi à environ 0,15 par mm. Ce taux permet une découpe aisée et fiable de chaque feuille.

Dans le cas d'une application en papier toilette, l'invention permettant avantageusement de ne consommer qu'une feuille par utilisation, des rouleaux comportant un nombre réduit de feuilles, c'est-à-dire entre 60 et 120 au lieu d'environ 150 habituellement, sont formés ; cette réduction n'étant nullement pénalisante pour l'utilisateur.

Par ailleurs, de façon surprenante et inattendue, les plis formant les feuilles selon l'invention ne se désassocient pas entre eux lors de la formation des rouleaux. Ceci semble être notamment dû à leur bonne association ainsi qu'à leur grande souplesse et élasticité.

Selon un autre mode de réalisation de l'invention, les feuilles peuvent être empilées, puis éventuellement emballées pour former des paquets.

Avantageusement, conformément au mode de réalisation illustré par la figure 2 au niveau du marieur 9, les plis sont associés entre eux sous une pression spécifique d'environ 10 kg/mm$^2$. La pression spécifique est plus particulièrement appliquée au niveau des points et/ou des lignes de collage régulièrement réparties dans le sens travers, selon des génératrices du premier cylindre de gravure 51.

Plus précisément, la pression spécifique doit être constante sur toute la surface développée du premier cylindre 51, afin notamment de diminuer les vibrations donc l'usure dudit cylindre.

En fonction de la nature et des caractéristiques finales de la feuille obtenue, la pression spécifique peut varier de 3 à 16 kg/mm$^2$.

A titre illustratif, des feuilles comprenant neuf plis ont été fabriquées selon l'invention. Leur grammage est d'environ 150 g/m$^2$, et leur épaisseur d'environ 1 mm. La pression spécifique au niveau du marieur est alors d'environ 11 kg/mm$^2$. Le procédé de fabrication correspondant est réalisé avec une installation telle que schématisée sur la figure 2 et explicité ci-avant. Vis-à-vis de la figure 1, chacun des plis 1, 2 et 3 est ici constitué de trois plis réunis, de façon connue en soi, en amont de chaque unité de gaufrage (51, 52 ; 61, 62 ; 71, 72). En outre chaque pli est ici fabriqué au préalable en voie humide selon une technique dite CWP.

La feuille absorbante multi plis selon l'invention peut comprendre uniquement des plis ainsi formés, qui sont finalement associés ensemble conformément à la figure 2.

Sans sortir du cadre de l'invention, les plis peuvent être fabriqués en phase humide selon une technique dite TAD (through air drying) connue en elle-même et qui consiste, globalement, à projeter un ensemble de fibres papetières sur une toile afin de former un matelas, à transférer ce matelas contre la surface d'un cylindre de séchage poreux, à faire traverser le matelas par des jets d'air issus dudit cylindre, puis à transférer le pli ainsi formé sur un cylindre dit de crêpage. On forme ainsi un ou plusieurs plis.

Des plis formés en phase humide conformément à l'enseignement de la demande EP 1 353 010 peuvent également faire partie d'une feuille selon l'invention.

L'association des plis pourra être réalisée avec une installation selon la figure 2, qui pourra comprendre ou non une unité d'encollage.

L'invention vise en outre des feuilles comprenant à la fois des plis obtenus selon une technique conventionnelle (dite CWP) et des plis réalisés selon la technique TAD.

Les plis de type TAD peuvent constituer les deux faces extérieures de telles feuilles. Un toucher très doux est alors obtenu. Les plis intérieurs peuvent être réalisés selon une technique CWP ou autre.

Sans sortir du cadre de l'invention, les plis extérieurs peuvent être fabriqués en voie humide selon une technique conventionnelle (CWP) et former les deux faces extérieures de la feuille. Dans cette configuration, les plis intérieurs peuvent être réalisés selon une technique de type TAD.

Bien entendu, une combinaison de plis visant à obtenir une feuille ayant une face formée d'un pli conventionnel et une face formée selon une technique de type TAD, peut aussi être réalisée sans sortir du cadre de l'invention.

On choisira l'une ou l'autre des combinaisons selon le cas d'espèce c'est-à-dire en fonction du toucher, de l'absorption, de la souplesse prioritairement souhaitées, ou encore selon des contraintes d'ordre économique.

Par ailleurs, il est parfaitement envisageable de réaliser une feuille selon l'invention sans utiliser de colle pour associer les plis, quelque soit la nature de chacun des plis (ou groupe de plis) qui constitue ladite feuille.

## Revendications

1. Feuille absorbante, à usage sanitaire telle que de papier toilette, délitable multi-plis, sensiblement rectangulaire, à base d'ouate de cellulose, **caractérisée en ce qu'**elle comprend au moins cinq plis et au plus douze plis les plis sont liés par collage le long de zones gaufrées, et **en ce qu'**elle présente un coefficient $K_{NOVE} = R_{SM} \times R_{ST} \times A \times G \times Exp (12 \times (E + E_P)) \times (1/Ep\ (sep)) > 75\ 000$ avec

   $R_{ST}$ = résistance à la traction selon la largeur de la feuille en N/m, comprise entre 200 N/m et 500 N/m ;

   $R_{SM}$ = résistance à la traction selon la longueur de la feuille en N/m, comprise entre 400 N/m et 1000 N/m ;

   G = grammage de la feuille en $kg/m^2$, supérieur à 70 $g/m^2$ et inférieur à 150 $g_/m^2$ ;

   E = épaisseur de la feuille en mm, supérieure à 0,75 mm et inférieure à 1,5 mm ;

   Sp = souplesse de la feuille en N ;

   A = absorption de la feuille en $kg/m^2$ ;

   $E_P$ = épaisseur moyenne d'un pli de la feuille en mm, $E_P$ étant supérieure à 0,115 mm.

2. Feuille absorbante selon la revendication 1, **caractérisée en ce qu'**elle présente en outre un coefficient $K_D = K_{NOVE} \times exp\ (D) > 100\ 000$, D étant une valeur de douceur comprise entre -3 et +3.

3. Feuille absorbante délitable multi-plis, selon l'une quelconque des revendications précédentes, **caractérisée en ce qu'**elle présente une résistance à la traction selon sa longueur $R_{SM}$ supérieure à environ 700 N/m.

4. Feuille selon l'une quelconque des revendications précédentes, **caractérisée en ce qu'**elle présente une résistance à la traction selon sa largeur $R_{ST}$ supérieure à 300 N/m.

5. Feuille selon l'une quelconque des revendications précédentes, **caractérisée en ce qu'**elle comprend entre 5 et 9 plis.

6. Feuille selon l'une quelconque des revendications précédentes, **caractérisée en ce que** chaque pli comprend un groupe de plis.

7. Feuille selon l'une quelconque des revendications précédentes, **caractérisée en ce qu'**elle présente une longueur d'environ 140mm et une largeur d'environ 110mm.

8. Feuille selon l'une quelconque des revendications précédentes, **caractérisée en ce que** lesdits plis formant l'une au moins des surfaces externes de ladite feuille sont de type TAD.

9. Rouleau comprenant un ensemble de feuilles selon l'une quelconque des revendications précédentes, **caractérisé**

**en ce qu'**il comprend entre 60 et 120 feuilles.

10. Procédé de fabrication de feuilles absorbantes délitables multiplis selon l'une quelconque des revendications 1 à 8, **caractérisé en ce qu'**il consiste à gaufrer séparément et différemment trois plis ou trois groupesde plis (1, 2, 3) formant ladite feuille, à associer chimiquement lesdits plis grâce à une unique unité de collage (8) puis à associer mécaniquement l'ensemble des plis grâce à un cylindre de pression(9).

11. Procédé selon la revendication 10, selon lequel
on gaufre séparément chacun desdits trois plis (1, 2, 3) entre un cylindre gravé en acier (51, 61, 71) et un cylindre en caoutchouc (52, 62, 72),
on applique le deuxième pli (2) sur le premier pli(1) on dépose la colle (8) sur le deuxième pli (2)
on applique le troisième pli (3) gaufré sur le deuxième pli (2) et
on associe les trois plis en appliquant une pression de liage au moyen d'un cylindre de pression (9).

12. Procédé selon la revendication 11 selon lequel on applique la colle au moyen d'un cylindre applicateur (81) en appui sur le cylindre gravé (51) de gaufrage du premier pli, le cylindre applicateur (81) étant en appui suffisant pour faire pénétrer la colle jusqu'au premier pli (1).

13. Procédé selon la revendication 12, selon lequel on applique une pression de liage des trois plis au moyen du cylindre de pression (9) en appui sur le cylindre gravé (51) de gaufrage du premier pli (1), les trois plis (1, 2, 3) étant appliqués sur ledit cylindre (51).

14. Procécé de fabrication de feuilles absorbantes délitables multi-plis selon l'une quelconque des revendications 1 à 8 consistant, en phase humide, à projeter un ensemble de fibres papetières sur une toile afin de former un matelas, à transférer ce matelas contre la surface d'un cylindre de séchage poreux, à faire traverser le matelas par des jets d'air issus dudit cylindre puis à transférer le pli ainsi formé sur un cylindre de crêpage, **caractérisé en ce qu'**il consiste à former ainsi plusieurs plis indépendamment puis à associer ensemble lesdits plis en phase de transformation par déformation mécanique.

15. Procédé de fabrication selon l'une quelconque des revendications 10 à 14, **caractérisé en ce que** les plis sont associés mécaniquement entre eux sous une pression spécifique minimale d'environ 3 kg/mm$^2$.

**Claims**

1. Absorbent sheet, for sanitary use such as toilet paper, multi-ply and separable, substantially rectangular, based on cellulose fibre, **characterised in that** it comprises at least five plies and no more than twelve plies, the plies are linked by adhesive bonding along embossed zones, and **in that** it has a $K_{NOVE}$ coefficient = $R_{SM} \times R_{ST} \times A \times G \times$ Exp (12 x (E + E$_P$)) x (1/Exp (Sp)) > 75,000 with
$R_{ST}$ = tensile strength across the width of the sheet in N/m, between 200 N/m and 500 N/m;
$R_{SM}$ - tensile strength along the length of the sheet in N/m, between 400 N/m and 1000 N/m;
G = grammage of the sheet in kg/m$^2$, greater than 70 g/m$^2$ and less than 150 g/m$^2$.
E = thickness of the sheet in mm, greater than 0.75 mm and less than 1.5 mm;
$S_P$ = flexibility of the sheet in N;
A = absorption of the sheet in kg/m$^2$;
$E_P$ = mean thickness of a ply of the sheet in mm, $E_P$ being greater than 0.115 mm.

2. Absorbent sheet according to claim 1, **characterised in that** it also has a $K_D$ coefficient = $K_{NOVE}$ x exp (D) > 100,000, D being a softness value of between -3 and +3.

3. Multi-ply separable absorbant sheet according to any one of the preceding claims, **characterised in that** it has a tensile strength along its length $R_{SM}$ greater than approximately 700 N/m.

4. Sheet according to any one of the preceding claims, **characterised in that** it has a tensile strength across its width $R_{ST}$ greater than 300 N/m.

5. Sheet according to any one of the preceding claims, **characterised in that** it comprises between 5 and 9 plies.

**6.** Sheet according to any one of the preceding claims, **characterised in that** each ply comprises a group of plies.

**7.** Sheet according to any one of the preceding claims, **characterised in that** it has a length of approximately 140 mm and a width of approximately 110 mm.

**8.** Sheet according to any one of the preceding claims, **characterised in that** said plies forming at least one of the external surfaces of said sheet are of the TAD type.

**9.** Roll comprising a set of sheets according to any one of the preceding claims, **characterised in that** it comprises between 60 and 120 sheets.

**10.** Method of manufacturing multi-ply separable absorbent sheets according to any one of claims 1 to 8, **characterised in that** it consists of separately and differently embossing three plies or three groups of ply (1, 2, 3) forming said sheet, chemically associating said plies by means of a single adhesive bonding unit (8) and then mechanically associating all the plies by means of a pressure cylinder (9).

**11.** Method according to claim 10, according to which
each of said three plies (1, 2, 3) is embossed separately between a steel engraved cylinder (51, 61, 71) and a rubber cylinder (52, 62, 72),
the second ply (2) is applied against the first ply (1) and adhesive (8) is deposited on the second ply (2),
the third embossed ply (3) is applied against the second ply (2) and
the three plies are associated by applying a binding pressure by means of a pressure cylinder (9).

**12.** Method according to claim 11, according to which the adhesive is applied by means of an applicator cylinder (81) in abutment on the engraved cylinder (51) for embossing the first ply, the applicator cylinder (81) being in sufficient abutment to make the glue penetrate as far as the first ply (1).

**13.** Method according to claim 12, according to which a pressure binding the three plies is applied by means of a pressure cylinder (9) in abutment on the engraved cylinder (51) for embossing the first ply (1), the three plies (1, 2, 3) being applied against said cylinder (51).

**14.** Method of manufacturing multi-ply separable absorbent sheets according to any one of claims 1 to 8, consisting, in a wet phase, of spraying a set of paper fibres onto a cloth in order to form a mattress, transferring this mattress against the surface of porous drying cylinder, making the mattress traverse by means of air jets issuing from said cylinder and then transferring the ply thus formed onto a crimping cylinder, **characterised in that** it consists of thus forming several plies independently and then associating said plies together in a phase of transformation by mechanical deformation.

**15.** Manufacturing method according to any one of claims 10 to 14, **characterised in that** the plies are associated mechanically together under a minimum specific pressure of approximately 3 kg/mm$^2$.

**Patentansprüche**

**1.** Saugfähiges Blatt zur sanitären Verwendung wie z.B. Toilettenpapier, abtrennbar, mehrlagig, im Wesentlichen rechteckig, basierend auf Zellulosewatte, **dadurch gekennzeichnet, dass** es zumindest fünf Lagen und höchstens zwölf Lagen umfasst, wobei die Lagen entlang der geprägten Bereiche durch Kleben verbunden sind, und **dadurch**, dass es einen Koeffizienten, $K_{NOVE} = R_{SM} \times R_{ST} \times A \times G \times Exp\,(12 \times (E + E_p)) \times (1/Exp\,(Sp)) > 75\,000$ aufweist, wobei
$R_{ST}$ = Zugfestigkeit entlang der Breite des Blattes in N/m, enthalten zwischen 200 N/m und 500 N/m;
$R_{SM}$ = Zugfestigkeit entlang der Länge des Blattes in N/m, enthalten zwischen 400 N/m und 1000 N/m;
G = Flächengewicht des Blattes in kg/m$^2$, größer als 70 g/m$^2$ und geringer als 150 g/m$^2$;
E = Dicke des Blattes in mm, größer als 0,75 mm und kleiner als 1,5 mm;
Sp = Geschmeidigkeit des Blattes in N;
A = Absorption des Blattes in kg/m$^2$;
Ep = mittlere Dichte einer Lage des Blattes in mm, wobei $E_p$ größer als 0,115 mm ist.

**2.** Saugfähiges Blatt nach Anspruch 1, **dadurch gekennzeichnet, dass** es außerdem einen Koeffizienten $K_D = K_{NOVE} \times exp\,(D) > 100\,000$ aufweist, wobei D ein Weichheitswert ist, der zwischen -3 und +3 liegt.

3. Mehrlagiges, abtrennbares, saugfähiges Blatt nach einem der vorhergehenden Ansprüche, **dadurch gekennzeichnet, dass** es eine Zugfestigkeit entlang seiner Länge $R_{SM}$ aufweist, die größer als ungefähr 700 N/mn ist.

4. Blatt nach einem der vorhergehenden Ansprüche, **dadurch gekennzeichnet, dass** es eine Zugfestigkeit entlang seiner Breite $R_{ST}$ aufweist, die größer als 300 N/m ist.

5. Blatt nach einem der vorhergehenden Ansprüche, **dadurch gekennzeichnet, dass** es zwischen 5 und 9 Lagen umfasst.

6. Blatt nach einem der vorhergehenden Ansprüche, **dadurch gekennzeichnet, dass** jede Lage eine Gruppe von Lagen umfasst.

7. Blatt nach einem der vorhergehenden Ansprüche, **dadurch gekennzeichnet, dass** es eine Länge von ungefähr 140 mm und eine Breite von ungefähr 110 mm aufweist.

8. Blatt nach einem der vorhergehenden Ansprüche, **dadurch gekennzeichnet, dass** die Lagen, die zumindest eine der Außenflächen des Blattes bilden, des Typs TAD sind.

9. Rolle, umfassend eine Gruppe von Blättern nach einem der vorhergehenden Ansprüche, **dadurch gekennzeichnet, dass** sie zwischen 60 und 120 Blätter umfasst.

10. Verfahren zur Herstellung von mehrlagigen, abtrennbaren, saugfähigen Blättern nach einem der Ansprüche 1 bis 8, **dadurch gekennzeichnet, dass** es darin besteht, getrennt und differenziert drei Lagen oder drei Gruppen von Lagen (1, 2, 3), die das Blatt bilden, zu prägen, die Lagen mithilfe einer einzigen Klebeeinheit (8) chemisch miteinander zu verbinden und dann die Gruppe der Lagen mithilfe eines Druckzylinders (9) miteinander zu verbinden.

11. Verfahren nach Anspruch 10, nach dem
jede der drei Lagen (1, 2, 3) zwischen einem gravierten Zylinder aus Stahl (51, 61, 71) und einem Zylinder aus Gummi (52, 62, 72) getrennt geprägt wird,
die zweite Lage (2) auf die erste Lage (1) aufgebracht wird, der Klebstoff (8) auf die zweite Lage (2) aufgetragen wird
die dritte geprägte Lage (3) auf die zweite Lage (2) aufgebracht wird und
die drei Lagen unter Anwendung eines Bindedrucks mithilfe eines Druckzylinders (9) verbunden werden.

12. Verfahren nach Anspruch 11, nach dem der Klebstoff mithilfe eines Auftragszylinders (81), aufliegend auf dem gravierten Zylinder (51) zur Prägung des ersten Lage, aufgebracht wird, wobei der Auftragszylinder (81) ausreichend aufliegt, um den Klebstoff bis zur ersten Lage (1) eindringen zu lassen.

13. Verfahren nach Anspruch 12, nach dem ein Druck zur Bindung der drei Lagen mithilfe eines Druckzylinders (9), aufliegend auf dem gravierten Zylinder (51) zur Prägung der ersten Lage (1) angewendet wird, wobei die drei Lagen (1, 2, 3) auf den Zylinder (51) aufgebracht werden.

14. Verfahren zur Herstellung von mehrlagigen, abtrennbaren, saugfähigen Blättern nach einem der Ansprüche 1 bis 8, umfassend, in der feuchten Phase, die Projektion einer Gruppe von Papierfasern auf eine Leinwand, um eine Matte zu bilden, der Übertragung dieser Matte auf die Oberfläche eines porösen Trockenzylinders, die Durchdringung der Matte mit Luftstrahlen aus dem Zylinder und dann die Übertragung der so gebildeten Lage auf einen Kreppzylinder, **dadurch gekennzeichnet, dass** es darin besteht, so mehrere Lagen unabhängig voneinander zu bilden und dann die Lagen in der Phase der Umformung durch mechanische Verformung miteinander zu verbinden.

15. Verfahren zur Herstellung nach einem der Ansprüche 10 bis 14, **dadurch gekennzeichnet, dass** die Lagen unter einem minimalen spezifischen Druck von ungefähr 3 kg/mm$^2$ untereinander mechanisch verbunden werden.

FIG.1

FIG.3

**FIG.2**

EP 2 013 416 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9720107 A
- WO 9852745 A
- FR 2775698
- US 3377224 A

- EP 864014 B1
- EP 126253 A
- EP 1353010 A